# EUROPEAN PATENT SPECIFICATION

(11) **EP 3 445 081 B1**
(45) Date of publication and mention of the grant of the patent: **02.08.2023**
(21) Application number: 17781729.3
(22) Date of filing: 09.02.2017
(51) Int. Cl.: H04W 28/02

(54) **FLOW-BASED BEARER MANAGEMENT METHOD AND DEVICE**
FLUSSBASIERTES TRÄGERMANAGEMENTVERFAHREN UND -VORRICHTUNG
PROCÉDÉ ET DISPOSITIF DE GESTION DE PORTEUSE À BASE DE FLUX

(30) Priority: 11.04.2016 CN 201610224064
(43) Date of publication of application: 20.02.2019
(73) Proprietor: ZTE Corporation, Shenzhen, Guangdong 518057 (CN)
(72) Inventor: SHI, Xiaojuan, Shenzhen, Guangdong 518057 (CN); HUANG, He, Shenzhen, Guangdong 518057 (CN); LIANG, Shuang, Shenzhen, Guangdong 518057 (CN)
(74) Representative: Regimbeau
(86) International application number: PCT/CN2017/073162
(87) International publication number: WO 2017/177753

(56) References cited:
- WO-A1-2014/110410
- CN-A- 101 409 951
- CN-A- 102 469 087
- CN-A- 102 625 377
- US-A1- 2013 322 270
- US-A1- 2014 341 031
- INTEL: "Solution to Key Issue on QoS Framework", 3GPP DRAFT; S2-161055_NEXGEN_SOL_QOS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Sophia Antipolis, FRANCE; 20160223 - 20160226 22 February 2016 (2016-02-22), XP051078042, Retrieved from the Internet: URL:http://www.3gpp.org/ftp/Meetings_3GPP_ SYNC/SA2/Docs/ [retrieved on 2016-02-22]

## Description

### TECHNICAL FIELD

The present invention relates to, but is not limited to, mobile communication technologies and, in particular, to a flow-based bearer management method and device, and a data transmission method and device.

### BACKGROUND

In the past few decades, the mobile communication network has continuously developed from 2G, 3G to 4G. In this process, new communication equipment, such as intelligent terminals, handheld tablet computers and others are constantly emerging. The emergence of new communication equipment has generated a large number of new applications and new communication scenarios, so that the next generation 5G mobile communication systems will develop from the current people-centric communications to an Internet of everything system, which includes both interpersonal communication and inter-object communication.

To achieve Internet of everything, 5G system will use all possible networks. Therefore, in terms of mobile communication technologies, the 5G system is not a system that use just one radio access technology, and the 5G system may use a combination system of existing radio access technologies and new designed radio access technologies, such as using a combination of a Long Term Evaluation (LTE) access technology in 4G, a further evolved LTE (eLTE) access technology in 4G, Wireless Local Area Network (WLAN) related technologies, a new designed radio access technology in 5G. A Radio Access Network (RAN) which adopts these different radio access technologies accesses to a unified core network in a flexible and pluggable manner.

To guarantee scalability of the network, a Core Network (CN) and the access network in the 5G system need to be decoupled. That is, the core network and the access network may be evolved independently, and there is no need to make synchronous enhancements or changes in one side of the network due to enhancements or changes in the other side of the network. In other words, the design of the core network in the 5G systems needs to be unperceptive for different RANs.

Whether to support the interpersonal communication or to support the inter-object communication, different application services and different application scenarios have corresponding requirements for quality of service (QoS) in the communication process. Guaranteeing a consistent QoS is an important factor that the 5G systems need to consider.

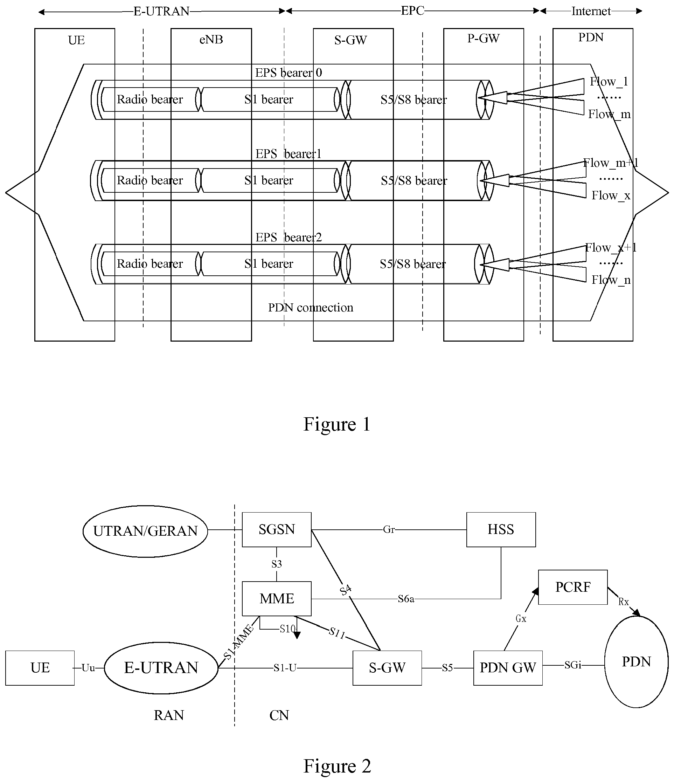

At present, in systems defined by the 3rd Generation Partnership Project (3GPP), the guarantee of the core network to the QoS of the services is relevant to the radio access technologies adopted by the access network. The access network performs a data scheduling and transmission according to QoS parameters notified by the core network. Using a QoS mechanism in the LTE as an example, a bearer is used as the minimum QoS processing unit during the data transmission. For example, FIG. 1 is a structural diagram of executing a QoS processing for the data transmission in bearer granularity in the LTE. FIG. 1 exemplarily shows a case where one PDN connection is establish between a user equipment (UE) and a Public Data Network (PDN). To serve traffic with different QoS requirements on the PDN connection, the core network may establish multiple Evolved Packet System bearers (EPS bearers) between the UE and a PDN gateway (P-GW). Each EPS bearer bears one or more traffic flows. The one or more traffic flows born on one EPS bearer have the same QoS. The EPS bearer is an end-to-end logic bearer between the UE and the P-GW. The EPS bearer sets up three bearers respectively on three network interfaces through which the EPS bearer passes in LTE network architecture. The three bears include a S5/S8 bearer establish on an interface of the P-GW and a Serving Gateway (S-GW), a S1-bearer establish on an interface of the S-GW and an eNB as well as a Radio Bearer (RB) establish on an air interface between the eNB and the UE. The S 1-bearer and the RB are collectively defined as an E-UTRAN Radio Access Bearer (E-RAB) between the UE and the S-GW. When establishing the EPS bearer, the CN notifies the eNB of the QoS parameters of each E-RAB (that is, a segment of the EPS bearer on E-URTAN side). The eNB sets up the RB on the air interface between the eNB and the UE. The eNB determines a parameter configuration of a corresponding RB according to received QoS parameters of an E-RAB granularity. The eNB and the UE perform data scheduling and transmission according to the determined RB parameter configuration to guarantee the QoS in the RB level on the air interface.

The method in which the core network and the access network are coupled together and the QoS processing is executed for transmission by taking the bearer as the granularity in 3GPP systems does not meet the target design in which the core network and the access network in future 5G systems. Further relevant technologies are also known from WO 2014/110410 A1 (INTERDIGITAL PATENT HOLDINGS [US]) 17 July 2014 (2014-07-17), which relates to methods, apparatuses and systems for user-plane congestion management, US 2014/341031 A1 (MUTIKAINEN JARI [FI]) 20 November 2014 (2014-11-20), which relates to differentiation of traffic flows mapped to the same bearer, and INTEL: "Solution to Key Issue on QoS Framework", 3GPP DRAFT; S2-161055 NEXGEN _SOL_QOS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Sophia Antipolis, FRANCE; 20160223- 20160226 22 February 2016 (2016-02-22), XP051078042, Retrieved from the Internet: URL:http://www.3gpp.org/ftp/Meetings_3GPP_SYNC/SA2/Docs/ [retrieved on 2016-02-22], which relates to proposes a bearerless QoS framework for inclusion in the TP.

### SUMMARY

The following is a summary of the subject matter described in detail in the present disclosure. This summary is not intended to limit the scope of the claims. The feature of the method and apparatus according to the present invention are defined in the independent claims. Further improvements are provided in the dependent claims.

The present disclosure provides a flow-based bearer management method, and a data transmission method and device, which meets the design target of the next generation communication system that the core network and the access network are decoupled, and achieves a flexible and dynamic differentiated data transmission between different traffic flows on radio links of the AN.

A flow-based bearer management method is provided in embodiments of the present invention, including:
acquiring service class information; and
managing a radio bearer according to the service class information; or managing a radio bearer according to the service class information and packet description information in a received data packet, wherein the packet description information comprises service class identifier information,
notifying a user equipment, UE, of a mapping relationship between the service class information and the radio bearer;
wherein the managing the radio bearer comprises establishing the radio bearer, and further comprises executing at least one of the following management operations: modifying the radio bearer and deleting the radio bearer;
wherein the managing the radio bearer comprises establishing the radio bearer, and further comprises executing at least one of the following management operations: modifying the radio bearer and deleting the radio bearer;
wherein the mapping relationship between the service class information and the radio bearer is represented by a mapping relationship between the service class identifier information and radio bearer identification information, the service class identifier information is used for identifying the service class information, and the radio bearer identification information is used for identifying the radio bearer;
wherein the radio bearer is disabled after being established, and the radio bearer is enabled in response to the AN receiving a downlink data packet from a core network, CN, or in response to the AN receiving a data transmission request from the UE.

A data transmission method is further provided in the embodiments of the present invention, including:
receiving, by the UE, a mapping relationship between service class information and a radio bearer from an access network, AN; and
transmitting, by the UE and according to the mapping relationship between the service class information and the radio bearer, a data packet on a corresponding radio bearer,
wherein the service class information comprises service class identifier information and at least one of the following information: a priority, a data packet delay, a data packet loss rate and a maximum data rate;
wherein a mapping relationship between the service class information and the radio bearer is represented by a mapping relationship between the service class identifier information and radio bearer identification information;
wherein the service class identifier information is used for identifying the service class information, the radio bearer identification information is used for identifying the radio bearer;
wherein the radio bearer is in a disabled state after being established, and the radio bearer is in an enabled state in response to a data transmission request sent to the AN by the UE.

A flow-based bearer management device is provided in the embodiment of the present invention, including:
an acquisition module, configured to acquire service class information; and
a management module, configured to establish a radio bearer, modify a radio bearer and delete a radio bearer according to the service class information; or establish a radio bearer, modify a radio bearer and delete a radio bearer according to the service class information and packet description information in a received data packet, wherein the packet description information comprises service class identifier information,
wherein the management module is further configured to notify a UE of a mapping relationship between the service class information and the radio bearer;
wherein the service class information comprises service class identifier information and at least one of the following information: a priority, a data packet delay, a data packet loss rate and a maximum data rate;
wherein the mapping relationship between the service class information and the radio bearer is represented by a mapping relationship between the service class identifier information and radio bearer identification information, the service class identifier information is used for identifying the service class information, and the radio bearer identification information is used for identifying the radio bearer;
wherein the radio bearer is disabled after being established, and the radio bearer is enabled in response to the AN receiving a downlink data packet from a core network, CN, or in response to the AN receiving a data transmission request from the UE.

A user equipment is further provided in the embodiments of the present invention, including:
a receiving module, which is configured to receive a mapping relationship between service class information service description information and a radio bearer from an access network, AN; and
a transmission module, which is configured to transmit, according to the mapping relationship between the service class information and the radio bearer, a data packet on a corresponding radio bearer,
wherein the service class information comprises the service class identifier information and at least one of the following information: a priority, a data packet delay, a data packet loss rate and a maximum data rate;
wherein the mapping relationship between the service class information and the radio bearer is represented by a mapping relationship between the service class identifier information and radio bearer identification information;
wherein the service class identifier information is used for identifying the service class information, the radio bearer identification information is used for identifying the radio bearer;
wherein the radio bearer is in a disabled state after being established, and the radio bearer is in an enabled state in response to a data transmission request sent to the AN by the UE.

According to the flow-based bearer management method and device, and the data transmission method and device provided by embodiments of the present invention, quality of service description information is provided to an access network based on the features of data flows, and the access network performs the bearer management based on received information in a data flow level, instead of performing a QoS processing in a bearer manner in which an core network and the access network are strongly related. The core network does not need to consider technologies adopted by the access network, which can well meet the next generation communication system's design target that the core network and the access network are decoupled. And a flexible and dynamic differentiated data transmission is achieved between different traffic flows on radio links of the AN.

Other aspects can be understood after the accompanying drawings and detailed description are read and understood.

### BRIEF DESCRIPTION OF DRAWINGS

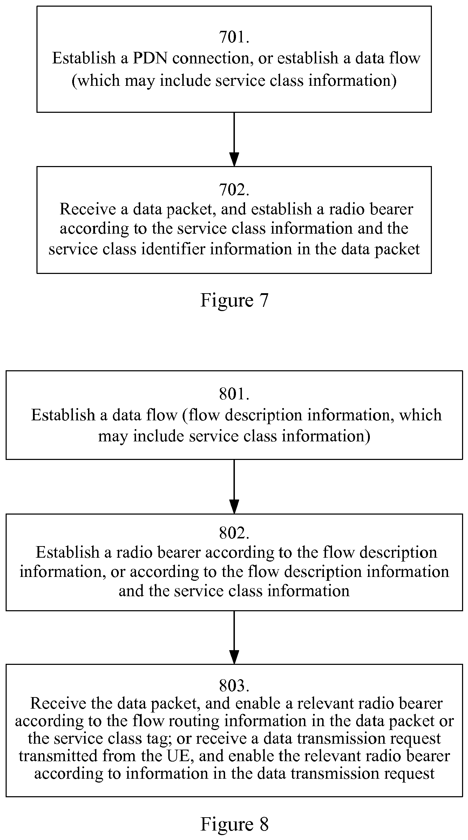

In the following drawings, FIGS. 8-9 and 11-12 are examples of the non-claimed inventions and thus are not part of the claimed invention.

The drawings are provided to further understand the technical solutions of the present invention, and serve as a component of the description. The drawings are to be used with embodiments of the present invention to explain the technical solutions of the present invention, and do not serve to limit the technical solutions of the present invention.
FIG. 1 is a structural diagram of executing a QoS processing with bearer granularity for a data transmission in LTE according to an embodiment of the present invention;
FIG. 2 is a diagram illustrating a network structure of an evolved packet system defined by the 3GPP according to an embodiment of the present invention;
FIG. 3 is a diagram illustrating a network structure of next generation mobile communication systems according to an embodiment of the present invention;
FIG. 4 is a flowchart of a flow-based bearer management method according to an embodiment of the present invention;
FIG. 5 is a flowchart of a data transmission method according to an embodiment of the present invention;
FIG. 6 is an implementation flowchart of a bearer management according to embodiment one of the present invention;
FIG. 7 is an implementation flowchart of a bearer management according to embodiment two of the present invention;
FIG. 8 is an implementation flowchart of a bearer management according to embodiment three of the present invention;
FIG. 9 is an implementation flowchart of a bearer management according to embodiment four of the present invention;
FIG. 10 is a flowchart of establishing a PDN connection initiated by a LTE according to an embodiment of the present invention;
FIG. 11 is a flowchart of a data flow establishment/modification/ deletion initiated by a network according to an embodiment of the present invention;
FIG. 12 is a flowchart of a data flow establishment/modification/ deletion initiated by a UE according to an embodiment of the present invention;
FIG. 13 is a structural diagram of a flow-based bearer management device according to an embodiment of the present invention; and
FIG. 14 is a structural diagram of a data transmission device according to an embodiment of the present invention

### DETAILED DESCRIPTION

FIGS. 8-9 and 11-12 and the description thereof relate to an example of the non-claimed inventions and thus are not part of the claimed invention.

Embodiments of the present invention will be described below in detail with reference to the accompanying drawings. It is to be noted that if not in collision, the embodiments described herein and the features thereof may be combined with each other.

The steps illustrated in the flowcharts in the accompanying drawings may be executed by, for example, a set of computer-executable instructions in a computer system. Although the flowchart illustrates a logical order, the steps illustrated or described may, in some cases, be executed in an order different from that herein.

Before expanding the detailed description of solutions of the present invention, the present invention briefly describes an Evolved Packet System bearer (EPS) defined by the current 3rd Generation Partnership Project (3GPP) and an industry-recognized network structure of next generation mobile communication systems.

For example, FIG. 2 is a diagram illustrating a network structure of the EPS defined by the 3GPP. The EPS includes an access network and a core network. The access network, according to different adopted radio access technologies, may be an Evolved Universal Terrestrial Radio Access Network (E-UTRAN), or a Universal Terrestrial Radio Access Network (UTRAN), or a GSM EDGE Radio Access Network (GERAN). The core network includes network elements/entities for completing different functions, and may include a Home Subscriber Server (HSS), a Mobility Management Entity (MME), a Serving GPRS Support Node (SGSN), a Policy and Charging Rule Function (PCRF) entity, an S-GW, a P-GW and a PDN.

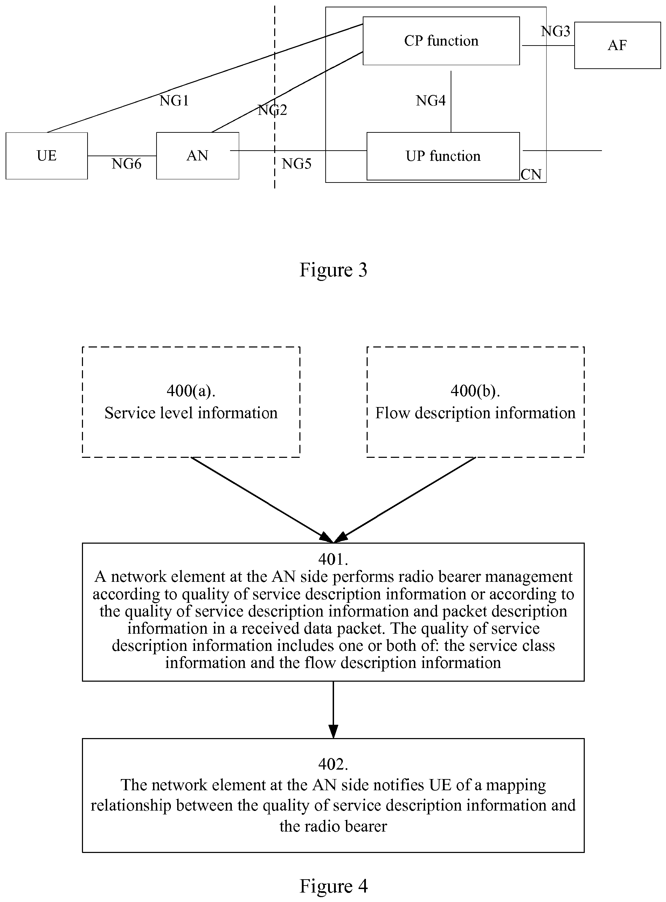

FIG. 3 is a simplified diagram illustrating a network structure of a next generation mobile communication system. The next generation mobile communication system also includes an access network and a core network. The core network of the next generation mobile communication system needs to support a network function virtualization and a software defined network. In FIG. 3, the core network is roughly divided into a Control Plane function (CP function) and a User Plane function (UP function) according to functions. The CP function, according to the completed actual functions, may include functions similar to functions completed by the entities of the MME, S-GW control plane, P-GW control plane and PCRF in the Evolved Packet System bearer. The CP function may be implemented on one network element/entity, or be implemented on more than one network elements/entities according to requirements. The UP function, according to the completed actual functions, may include functions similar to functions completed by the entities such as an S-GW user plane and P-GW user plane in the Evolved Packet System bearer. The UP function may also be implemented on one network element/entity, or be implemented on more than one network elements/entities according to requirements. If the CP function is implemented on more than one network elements/entities, then these network elements/entities may all have interfaces with the AN, these network elements/entities may also implement only one interface with the AN by one of these network elements/entities. To make different access networks of the next generation mobile communication systems access to a unified core network shown in FIG. 3 in a flexible and pluggable manner, the network structure shown in FIG. 3 may have an adaptation layer between the AN and the CN for adapting different ANs to a unified CN. If the adaptation layer exists, the interfaces between the CN and the AN include an interface between the CN and the adaptation layer as well as an interface between the adaptation layer and the AN. The interfaces related to the present invention are all logic interfaces, and their physical interface features are not limited.

The access network (AN) is a general term, and may be an access network adopting different radio access technologies, such as an access network adopting to a LTE/eLTE technology, an access network adopting to a WLAN related technology, an access network adopting to an introduced New Radio (NR) technology in 5G. The AN includes one or more network elements/entities for implementing relevant radio access technology functions, such as the eNB, a Central Unit (CU), a Remote Unit (RU) or an adaption unit. The relevant radio access technology functions, using the LTE or eLTE as an example, include a Radio Resource Control (RRC) function, a Packet Data Convergence Protocol (PDCP) function, a Radio Link Control (RLC) function, a Media Access Control (MAC) function or a Physical (PHY) function. These functions are implemented in the eNB. The eNB may also be divided into a BaseBand Unit (BBU) and a Remote Radio Unit (RRU) in actual physical implementation. In the NR, the radio access technology functions may include part or all functions of the RRC, PDCP, RLC, MAC and PHY, even include new designed functions. These functions may be implemented on one eNB network element/entity, or implemented by being distributed on the CU and the RU, or implemented by being distributed on the CU, the RU and the adaption unit. The distribution manners may be flexible configured according to different scenarios and different requirements.

Based on the network structure of the next generation mobile communication systems shown in FIG. 3, embodiments of the present invention provide a flow-based radio bearer management method. FIG. 4 is a flowchart of the flow-based bearer management method according to an embodiment of the present invention. As shown in FIG. 4, the method includes the following steps.

In step 401, a network element at the AN side performs a radio bearer (RB) management according to quality of service description information or according to the quality of service description information and packet description information in a received data packet,. The quality of service description information includes one or both of the following information: service class information and flow description information.

Here, the network element at the AN side refer to the above-mentioned one, two or more network elements/entities for implementing relevant radio access technology functions. For example, the network element may be one, two or more of the eNB, CU, RU and adaption unit.

The service class information includes service class identifier information and at least one of the following information: a priority, a data packet delay, a data packet loss rate and a maximum data rate. In practice, the service class information may be identified by different service class identifier information. The service class information may be in the form of an information list. The information list is identified by the service class identifier information, and may include, but is not limited to at least one of the priority, the data packet delay, the data packet loss rate and the maximum data rate. For example, the service class identifier information may be Differentiated Services Code Point (DSCP) information, may also be QoS classifying identification information, may also be other encoding information representing service classes.

The flow description information at least includes flow identifier information, flow routing information and bandwidth information, also may include Allocation and Retention Priority (ARP) information. Here, the flow routing information at least includes a source IP address/IP network prefix, a target IP address/IP network prefix, a source port number and a protocol identifier of an upper layer protocol of a target port number IP. The flow description information is identified by different flow identifier information. The flow description information may be in the form of the information list. The information list is identified by the flow identifier information, and at least includes the flow routing information and bandwidth information, and may further include ARP information.

The packet description information includes at least one of the following information: the service class identifier information and the flow routing information.

The radio bearer management in step 401 includes the radio bearer establishment, modification and deletion, etc.

The service class information is predefined or acquired from the CN. The flow description information is acquired from the CN. Therefore, the above-mentioned method may further include one or both of steps 400(a) and 400(b). In step 400(a), the network element at the AN side acquires service class information from the CN. In step 400(b), the network element at the AN side acquires the flow description information from the CN.

As shown in FIG. 4, in a case where the radio bearer may be used for an uplink transmission, the method in the embodiments of the present invention may further include the step 402, in which the network element at the AN side notifies the UE of a mapping relationship between the quality of service description information and the radio bearer. The radio bearer in the notified mapping relationship at least includes the radio beater available for the uplink transmission.

In the embodiments of the present invention, a downlink transmission refers to a case where data is transmitted from the CN to the AN, and transmitted by the AN to the UE. The uplink transmission refers to a case where the data is transmitted from the UE to the AN, and transmitted by the AN to the CN.

The service class information is identified by the service class identifier information. The flow description information is identified by the flow identifier information and includes the flow routing information. The radio bearer is identified by radio bearer identification information. The network element at the AN side may notify the UE of the mapping relationship between the service class information and the radio bearer by a mapping relationship between the service class identifier information and the radio bearer identification information. The network element at the AN side may notify the UE of a mapping relationship between the flow description information and the radio bearer by a mapping relationship between the flow identifier information and the radio bearer identification information. The mapping relationship between the flow identifier information and the radio bearer identification information includes the flow routing information of the flow identified by each flow identifier information. Alternatively, for the flow description information, the network element at the AN side may also notify the UE of the mapping relationship between the flow description information and the radio bearer by a mapping relationship between the flow routing information and the radio bearer identification information. That is, the network element at the AN side may also represent the mapping relationship with the radio bearer identification information in one or more the following manners: the network element at the AN side may represent the mapping relationship between the service class information and the radio bearer by the mapping relationship between the service class identifier information and the radio bearer identification information; the network element at the AN side may represent the mapping relationship between the flow description information and the radio bearer by the mapping relationship between the flow identifier information and the radio bearer identification information; and the network element at the AN side may represent the mapping relationship between the flow description information and the radio bearer by the mapping relationship between the flow routing information and the radio bearer identification information.

The radio bearer management includes: establishing the radio bearer according to the service class information and obtaining the mapping relationship between the service class information and the radio bearer; or receiving a data packet, establishing the radio bearer according to the service class information and the packet description information in the data packet, and obtaining the mapping relationship between the service class information and the radio bearer. The packet description information is the service class identifier information. Alternatively, the radio bearer management includes establishing the radio bearer according to the flow description information and obtaining a mapping relationship between the flow description information and the radio bearer; or receiving the data packet, establishing the radio bearer according to the flow description information and the packet description information in the data packet, and obtaining the mapping relationship between the flow description information and the radio bearer. The packet description information is the flow routing information. Here, the data packet is transmitted from the CN or the UE. When the data packet is transmitted from the UE, the data packet transmitted by the UE is received on a default bearer.

After managing the radio bearer, the method further includes receiving the data packet transmitted from the CN, determining the radio bearer corresponding to the data packet according to the packet description information in the data packet and the mapping relationship between the service class information and the radio bearer, and transmitting the data packet on the determined radio bearer. The packet description information is the service class identifier information. Alternatively, after managing the radio bearer, the method further includes receiving the data packet transmitted from the CN, determining the radio bearer corresponding to the data packet according to the packet description information in the data packet and the mapping relationship between the flow description information and the radio bearer, and transmitting the data packet on the determined radio bearer, where the packet description information is the flow routing information.

After managing the radio bearer, the method further includes: receiving the data packet transmitted from the CN, enabling the radio bearer corresponding to the packet description information in the data packet according to the packet description information in the data packet and the mapping relationship between the service class information and the radio bearer, where the packet description information is the service class identifier information. Alternatively, after managing the radio bearer, the method further includes receiving a data transmission request transmitted from the UE, enabling a corresponding radio bearer according to radio bearer identification information in the data transmission request. The radio bearer identification information in the data transmission request is determined by the UE according to the mapping relationship between the service class information and the radio bearer as well as the packet description information in the data packet, and the packet description information is the service class identifier information. Here, when the UE sends the data transmission request, the UE can determine the radio bearer identification information according to the packet description information in the data packet transmitted from an upper layer protocol layer. The upper layer protocol layer refers to a protocol layer (such as an application layer.) above a protocol layer (such as an access layer protocol) responsible for processing and sending the data transmission request in the UE. After managing the radio bearer, the method further includes: receiving the data packet transmitted from the CN, enabling the radio bearer corresponding to the packet description information in the data packet according to the packet description information in the data packet as well as the mapping relationship between the flow description information and the radio bearer. The packet description information is the flow routing information. Alternatively, after managing the radio bearer, the method further includes receiving a data transmission request transmitted from the UE, enabling a corresponding radio bearer according to radio bearer identification information in the data transmission request. The radio bearer identification information in the data transmission request is determined by the UE according to the mapping relationship between the flow description information and the radio bearer as well as the packet description information in the data packet, and the packet description information is the flow routing information.

The data transmission request transmitted by the UE is received in one of the following manners: 1) the data transmission request is received on a signaling radio bearer; 2) the data transmission request is received on a designated radio bearer; and 3) the data transmission request is received on media access control (MAC) layer control information. The designated radio bearer is predefined or determined after establishing the radio bearer. The designated radio bearer is in an enabled state.

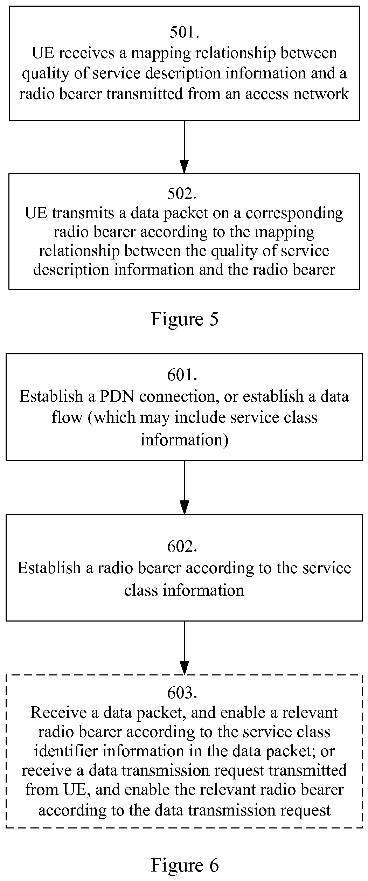

As shown in FIG. 5, the embodiments of the present invention further include a data transmission method, including the steps described below.

In step 501, the UE receives a mapping relationship between quality of service description information and a radio bearer transmitted from an access network (AN). The quality of service description information includes one or both of the following information: service class information and flow description information.

In step 502, the UE transmits the data packet on the corresponding radio bearer according to the mapping relationship between the quality of service description information and the radio bearer.

The step of the UE transmitting the data packet on the corresponding radio bearer according to the mapping relationship between the quality of service description information and the radio bearer may include the UE determining the radio bearer corresponding to the data packet according to the packet description information in the data packet as well as the mapping relationship between the service class information and the radio bearer, and transmitting the data packet on a determined radio bearer. The packet description information is the service class identifier information. Alternatively, the step of the UE transmitting the data packet on the corresponding radio bearer according to the mapping relationship between the quality of service description information and the radio bearer may include the UE determining the radio bearer corresponding to the data packet according to the packet description information in the data packet as well as the mapping relationship between the flow description information and the radio bearer, and transmitting the data packet on the determined radio bearer, where the packet description information is the flow routing information.

The method further includes a step that the UE determines the radio bearer identification information required to be enabled according to packet description information in the data packet as well as the mapping relationship between the service class information and the radio bearer, and sends a data transmission request including the radio bearer identification information to the AN, where the packet description information is the service class identifier information; or a step that the UE determines the radio bearer identification information required to be enabled according to packet description information in the data packet as well as the mapping relationship between the flow description information and the radio bearer, and sends the data transmission request including the radio bearer identification information to the AN, where the packet description information is the flow routing information.

The UE transmits the data transmission request is to the AN in one of the following manners: 1) the UE transmits the data transmission request on a signaling radio bearer; 2) the UE transmits the data transmission request on a designated radio bearer; and 3) the UE transmits the data transmission request on media access control (MAC) layer control information. The designated radio bearer is predefined or obtained by the UE obtains in information transmitted by the AN to the UE. The designated radio bearer is in the enabled state.

Before the UE receives the mapping relationship between the quality of service description information and the radio bearer transmitted by the AN, the method further includes a step that the UE transmits the data packet to the AN on a default bearer.

The following describes the implementation process of the method in the embodiment of the present invention for different application scenarios in which the network element at the AN side performs the radio bearer management according to different information.

### Embodiment 1

In embodiment 1, the method for the network element at an AN side performing RB management according to service class information is described in detail. The method in embodiment 1 is applicable to the transmission of traffic or data flows without specific bit rate requirements. For example, FIG. 6 is an implementation flowchart of the bearer management according to embodiment 1, including the steps described below.

In step 601, a PDN connection is established, or a data flow is established.

In this step, the PDN connection is established between a UE and a PDN, or the data flow is established on the PDN connection while establishing the PDN connection, or the data flow is established on the PDN connection after establishing the PDN connection.

In an implementation mode of this step, the CN notifies the AN of the service class information during the process of establishing the PDN connection or establishing the data flow.

The service class information includes service class identifier information, also incudes but is not limited to at least one of a priority, a data packet delay, a data packet loss rate and a maximum data rate. The service class information may be identified by different service class identifier information. The service class information may be in the form of an information list. The information list is identified by the service class identifier information, and may include, but is not limited to at least one of the priority, the data packet delay, the data packet loss rate and the maximum data rate. For example, table one is an exemplary list of the service class information. The service class identifier information in table one is DSCP, but what is not limited thereto. The service class identifier information may be other information for representing service classes different from naming and encoding of the DSCP, such as QoS classifying identification information. The embodiment of the present invention is not intended to limit other existing forms of the service class information or the service class information list.

**Table 1**

| service class identity (DSCP, in binary code for example) | priority | data packet delay (in milliseconds) | data packet loss rate |
|---|---|---|---|
| 101110 | 2 | 100 | 10-2 |
| 011010 | 4 | 150 | 10-3 |
| 100010 | 3 | 50 | 10-3 |
| 010010 | 5 | 300 | 10-6 |
| 101010 | 1 | 100 | 10-6 |
| 000000 | 6 | 300 | 10-6 |
| 101100 | 7 | 100 | 10-3 |
| 001010 | 8 | 300 | 10-6 |
| ...... | ...... | ...... | ...... |

In step 602, the AN establishes the RB according to the service class information.

Here, the service class information is predefined in the protocol, or the CN notifies the AN of the service class information in the step 601 (that is, the AN acquires the service class information from the CN). Using the service class information list shown in table 1 as an example, the AN establishes the RB, according to table 1 and according to one or more of the overload, usage of resources, signal quality on wireless communication links, and the AN management policy. For example, in this embodiment, the AN establishes three RBs, assumed to be a RB3, RB4 and RB5. The service classes whose DSCPs are 101110, 011010, 101010 and 101100 are mapped onto the RB3. The service class whose DSCP is 100010 is mapped onto the RB4. The service classes whose DSCPs are 010010, 000000 and 001010 are mapped onto the RB5. Of course, it is merely one implementation mode of this embodiment, and are not intended to limit the number of the RBs established by the AN according to the service class information and which DSCPs mapped onto which RB.

In this embodiment, if the RB that can be used for an uplink transmission is established, this step further includes that the network element at the AN side notifies the UE of a mapping relationship between the service class information and the RB for the uplink transmission. In this embodiment, it is assumed that the RB3 and RB4 may be used for the uplink transmission. The network element at the AN side uses a mapping relationship between the service class identifier information (such as the DSCP) and radio bearer identification information (for example, the radio bearer identification information of the RB3, RB4 and RB5 is 3, 4 and 5 respectively) to represent the mapping relationship between the service class information and the RB that can be used for the uplink transmission, and notify the UE of the mapping relationship. In this embodiment, DSCPs with values of 101110, 011010, 101010 and 101100 are mapped onto a radio bearer identification with a value of 3. The DSCP with a value of 100010 is mapped onto a radio bearer identification with a value of 4. This embodiment and the following relevant embodiments are not limited to that the AN notifies the UE of the mapping relationship between the service class information and the RB for the uplink transmission.

After this step, for a downlink transmission, the AN receives a downlink data packet transmitted from the CN, and determines which RB is used for to transmitting the data packet according to the service class identifier information in the data packet. Here, the service class identifier information corresponds to the service class identifier information in the step 601. For example, in this embodiment, the service class identifier information in the step 601 is the DSCP, and the service class identifier information in this step is also the DSCP. The service class identifier information may be included in a header of the data packet, such as in the header of an IP data packet. If the service class identifier information is other encoding information, such as the QoS classifying identification information, the service class identifier information in the data packet in this step also is the QoS classifying identification information. In this embodiment, for example, the AN receives the data packet from the CN, the DSCP in the packet header of the data packet is 101110, 011010 or 010010, the AN transmits the data packet in which the DSCP is 101110 or 011010 on the RB3, and transmits the data packet in which the DSCP is 010010 on the RB5.

Similarly, for the uplink transmission, the UE determines, according to the service class identifier information in the data packet as well as the mapping relationship notified by the AN between the service class information and the RB that may be used for the uplink transmission, to transmit the data packet on which RB.

Alternatively, in this embodiment, after establishing the RB according to the service class information, all RBS are in a disabled state, or only one specific RB that can be used for the uplink transmission is in an enabled state and other RBs are in the disabled state. The specific RB may be a predefined RB or be determined by the AN after the AN establishes the RBs. For a case where the AN establishes the RBs and then determines a specific RB in the enabled state, the AN notifies the UE of which RB is the specific RB, such as the RB4 in this embodiment, while notifying the UE of the mapping relationship between the service class information and the RBs that may be used for the uplink transmission. According to this method, the embodiment 1 further includes:
In step 603, the AN receives the data packet, and enables the relevant RB according to the service class identifier information in the data packet; alternatively, the AN receives a data transmission request from the UE, and enables the relevant RB according to the data transmission request.

For the downlink transmission, the AN receives a downlink data packet from the CN, and enables the relevant RB according to the service class identifier information in the data packet. In this embodiment, for example, the AN receives the data packet from the CN. The DSCPs in the header of the data packet are 101110, 011010, or 010010. Then the AN enables the RB3 and the RB5 to which these DSCPs are mapped.

In the embodiment of the present invention, enabling the RB refers to performing initialization operation on relevant variables of the RB. After the relevant RBs are enabled, data received by the AN is processed by relevant protocol entities of these RBs and then is sent to the UE via an air interface.

In this embodiment, the relevant RBs are enabled by the AN. The AN also notifies via the air interface the UE that the relevant RBs are enabled. Similarly, after receiving the data from the air interface, the UE performs processing in the relevant protocol entities of the relevant RBs. The relevant protocol entities of the RBs include at least one of a PDCP entity, a RLC entity and a MAC entity.

For the uplink transmission, when the UE determines that there exists uplink data that needs to be transmitted on an disabled RB, the UE sends the data transmission request to the AN via a signaling RB (which is defined in the related art and not repeated here), the specific RB in step 602, or MAC control information. The data transmission request includes RB information of the RB to be enabled in the request, and the AN enables the relevant RB according to the RB information. The RB information may be the radio bearer identification information.

In this embodiment, the UE determines, according to the mapping relationship between the service class information and the RBs that may be used for the uplink transmission, the uplink data that needs to be transmitted on the disabled RB. For example, the UE receives the data packet from the application layer. The DSCP in the packet header of the data packet is 101110. Then the UE determines the data packet that needs to be transmitted on the RB3 according to the mapping relationship between the service class identifier information and the radio bearer identification information received by the step 602. Then the data transmission request sent by the UE to the AN includes identification information of the RB3.

The above-mentioned steps in the embodiment 1 describe the RB establishing process in the RB management. According to at least one of the followings, the AN deletes part or all of the RBs that have been established.

The PDN connection between the UE and the PDN is deleted.

Part or all of the data flows on the PDN connection are deleted.

The AN determines, according to one or more of the overload, usage of resources, signal quality on wireless communication links, and the AN management policy, to delete the part or all of the RBs that have been established.

Accordingly, the AN notifies the UE of deleting the part or all of the RBs.

The AN modifies the part or all of the RBs according to at least one of the followings.

The service class information acquired from the CN by the AN changes.

The AN modifies, according to one or more of the overload, usage of resources, signal quality on wireless communication links, and the AN management policy, the part or all of the RBs that have been established.

Accordingly, the AN notifies the UE of modifying the part or all of the RBs.

Here, modifying the RBs refers to at least one of the following:
modifying configuration parameters of the relevant protocol entities of the RBs; and
modifying the mapping relationship between the service class information and the radio bearer.

The configuration parameters of the relevant protocol entities of the RBs have been described in relevant protocol standards 36.300 of the 3GPP, and will not be repeated here.

### Embodiment 2

In embodiment 2, the method for the network element at the AN side performing RB management according to service class information and packet description information is described in detail. The packet description information is service class identifier information. In actual implementation, the packet description information may be included in a header of a data packet. The method in the embodiment 2 is applicable to the transmission of traffic or data flows without specific bit rate requirements. FIG. 7 is an implementation flowchart of the bearer management according to the embodiment 2, including the steps described below.

In step 701, a PDN connection is established, or a data flows is established.

Here, the implementation process is the same with the implementation process in the step 601 in the embodiment 1, and will not be repeated here.

In step 702, the AN receives the data packet, and establishes the RB according to the service class information and the service class identifier information in the data packet.

The service class information in this embodiment may also be predefined in a protocol, or the CN notifies the AN of the service class information in the step 701. The following uses the service class information list shown in table one as an example.

For a downlink transmission, the AN receives the data packet from the CN, and establishes the RB according to the service class identifier information in the data packet and the service class information. For example, the AN receives the data packet from the CN. The DSCP in the packet header of the data packet is 101110, 011010 or 010010. The AN establishes two RBs, which are RB3 and RB4 respectively. The AN transmits the data packet whose DSCP is 101110 or 011010 on the RB3, and transmits the data packet whose DSCP is 010010 on the RB5. In this step, the AN may also consider one or more factors of overload, usage of resources, signal quality on wireless communication links, and the AN management policy when establishing the RB.

For an uplink transmission, this embodiment also includes a step 702-1 before the step 702. The AN establishes at least one default bearer RBx. When the UE has the uplink transmission, the UE transmits at least one data packet on the RBx. After receiving the data packet, the AN established a RB according to the service class identifier information in the data packet and the service class information. Of course, one or more factors of the overload, usage of resources, signal quality on wireless communication links, and the AN management policy may be the comprehensively considered during this process. For example, the UE receives the data packet from an application layer. The DSCP in the packet header of the data packet is 101110. The UE transmits at least one data packet in which the DSCP is 101110 on the RBx. After receiving the data packet, the AN establishes the RB3 according to the DSCP of the data packet and the service class information in the step 701, and notifies the UE of a mapping relationship between the service class information and the RB3. After the UE receives the mapping relationship between the service class information and the RB3, the data packet in which the DSCP is 101110 is transmitted on the RB3.

It is to be noted that the above-mentioned UE has the uplink transmission in this embodiment. For a case where in addition to the RBx, another RB that may be used for the uplink transmission have been established, the UE transmits the at least one data packet on the RBx, when the UE determines, according to the service class identifier information as well as the mapping relationship between the service class information notified by the AN and the RBs that have been establish and may be used for the uplink transmission, the data packet is not mapped onto any one of the RBs that have been established.

The above-mentioned steps describe the RBs establishing process in the RB management. The AN deletes part or all of the RBs that have been established according to at least one of the followings.

The PDN connection between the UE and the PDN is deleted.

Part or all of the data flows on the PDN connection are deleted.

The AN determines, according to one or more factors of the overload, usage of resources, signal quality on wireless communication links, and the AN management policy, to delete a part or all of the established RBs.

No data is transmitted on the RBs in a period of time T.

Accordingly, the AN notifies the UE of the deletion of the part or all of the RBs.

The AN modifies the part or all of the RBs according to at least one of the followings.

The service class information acquired from the CN by the AN changes.

The AN modifies a part or all of the RBs according to one or more factors of the overload, usage of resources, signal quality on wireless communication links, and the AN management policy.

No data is transmitted on the RBs in the period of time T.

Accordingly, the AN notifies the UE of the modification of the part or all of the RBs.

### Embodiment 3

In this embodiment, the method for an AN performing RB management according to flow description information or according to the flow description information and service class information is described in detail. The method in this embodiment is not only applicable to the transmission of traffic or data flows without specific bit rate requirements, but also applicable to the transmission of the traffic or the data flows with specific bit rate requirements. For example, FIG. 8 is an implementation flowchart of the bearer management in this embodiment, including steps described below.

In step 801, the data flow is established.

The data flow may be established on a PDN connection while establishing the PDN connection, or the data flow is established on the PDN connection after establishing the PDN connection.

In this step, during the process of establishing the data flows, a CN notifies the AN of the flow description information of the data flow. The flow description information at least includes flow identifier information, flow routing information and bandwidth information. The flow description information further includes ARP information.

The flow description information is identified by different flow identifier information. The flow description information may be implemented in the form of information list. The information list is identified by the flow identifier information, and at least includes the flow routing information and bandwidth information, and may also include the ARP information.

The CN may also notify the AN of the service class information, the implementation process is the same with the implementation process in the embodiment 1 and will not be repeated here.

In step 802, the AN establishes the RB according to the flow description information, or according to the flow description information and the service class information.

The service class information in this embodiment may also be predefined in a protocol, or the CN notifies the AN of the service class information in step 801. The following uses the service class information list shown in table one as an example.

In this embodiment, it is assumed that four data flows are established.
A data flow 1: flow identifier information 1, flow routing information 1 and bandwidth information 1 (value is X) and ARP 1;
A data flow 2: flow identifier information 2, flow routing information 2 and bandwidth information 2 (value is Y) and ARP2;
A data flow 3: flow identifier information 3, flow routing information 3 and bandwidth information 3 (value is X) and ARP3; and
A data flow 4: flow identifier information 4, flow routing information 4 and bandwidth information 4 (value is Y) and ARP4;

Assuming that the AN establishes two RBs according to the flow description information, which are RB6 and RB7 respectively. The AN maps the data flow 1 and the data flow 3 onto the RB6 and maps the data flow 2 and the data flow 4 onto the RB7. Here, the AN mapping the data flows with the same or similar bandwidth onto a same RB is merely one example, and is not intended to limit the disclosure. The AN may establish the RBs according to other information in the flow description information as well as by comprehensively considering one or more factors of the flow description information, service class information, overload, usage of resources, signal quality on wireless communication links, and the AN management policy, and maps the data flows onto different RBs.

In this embodiment, one or more other RBs may be established according to the service class information list while the RB6 and the RB7 are established. For example, the RB3-RB5 in embodiment 1 are established. Similarly, the service classes whose DSCPs are 101110, 011010, 101010 and 101100 are mapped onto the RB3. The service class whose DSCP is 100010 is mapped onto the RB4. The service classes whose DSCPs are 010010, 000000 and 001010 are mapped onto the RB5.

Similarly, in this embodiment, in a case where the RBs available for the uplink transmission have been established, this step further includes that the AN notifies the UE of a mapping relationship between the flow description information and the radio bearer. Alternatively, in a case where the RBs available for the uplink transmission have been established merely according to the service class information, the AN also notifies the UE of a mapping relationship between the service class information and the radio bearer. When the AN notifying the UE of the mapping relationship, the flow description information may be identified by the flow identifier information. For example, when the RB6-RB7 (which are available for the uplink transmission) are established in this embodiment, the AN maps the data flow 1 and the data flow 3 onto the RB6 as well as maps the data flow 2 and the data flow 4 onto the RB7. In actual implementation, the AN may establish a mapping relationship that the flow identifier information 1 & the flow identifier information 3 correspond to the RB6, as well as a mapping relationship that the flow identifier information 2 & the flow identifier information 4 correspond to the RB7, and notify the UE of the mapping relationship between the flow identifier information and the radio bearer (identified by radio bearer identification information). Alternatively, the AN may establish a mapping relationship between the flow routing information and the RB, and notify the UE of the mapping relationship between the flow routing information and the radio bearer (identified by the radio bearer identification information). The notification manner of the mapping relationship between the service class information and the radio bearer is the same with the notification manner in embodiment 1, and will not be repeated here.

After this step, for the downlink transmission, the AN receives the data packet from the CN, and determines on which RB the data packet is transmitted according to the flow routing information in the data packet or the service class identifier information, and applies to the RB3-RB5 according to the situation determined by the service class identifier information. The implementation processes of uplink and downlink is similar to the implementation processes in the embodiment 1, and will not be repeated here. This embodiment merely describes the situation in which the RB is determined according the flow routing information (including the uplink and the downlink). Each data flow has the flow routing information different from other data flows. The data packet is transmitted from which data flow may be determined according to the flow routing information in the data packet. For example, in a data packet received by the AN, the flow routing information included in the packet header is the flow routing information 1 and the flow routing information 3. The AN transmits the data flow 1 and the data flow 3 on the RB6. In actual implementation, the AN may determine the flow identifier information according to the flow routing information in the data packet and the flow description information obtained in the step 801, and further determine a corresponding RB according to the flow identifier information, or the AN may directly determine the corresponding RB according to the flow routing information in the data packet and the flow description information obtained in the step 801. Similarly, for the uplink transmission, the UE determines, according to the flow routing information in the data packet as well as the mapping relationship between the flow description information and the radio bearer received from the AN, on which RB the data packet is transmitted. In actual implementation, the UE may determine, according to the flow routing information in the data packet as well as the mapping relationship between the flow description information and the radio bearer notified by the AN, the flow identifier information, and further determine the corresponding RB according to the flow identifier information. Alternatively, the UE may directly determine the corresponding RB according to the flow identifier information as well as the mapping relationship between the flow description information and the radio bearer notified by the AN. The mapping relationship between the flow description information and the radio bearer includes the flow routing information of each flow.

In this embodiment, after establishing the RBs, all RBS are in on the disabled state, or only one specific RB for the uplink transmission is in on the enabled state and other RBs are in the disabled state. In this case, this embodiment may further include a step described below.

In step 803, the AN receives the data packet, and enables relevant RBs according to the flow routing information in the data packet or the service class identifier information; alternatively, the AN receives a data transmission request from the UE, and enables the relevant RBs according to the data transmission request.

The method for enabling the relevant RBs according to the service class identifier information is the same with the method in the embodiment 1, and will not be repeated here. The implementation process of enabling the relevant RBs according to the flow routing information is described below.

For the downlink transmission, the AN receives a downlink data packet from the CN, and enables the relevant RBs according to the flow routing information in the data packet. For example, in the data packet received by the AN, the flow routing information included in the packet header is the flow routing information 1 and the flow routing information 3, then the AN enables the RB6 to which the data flow 1 and the data flow 3 are mapped. Being similar to the embodiment 1, the AN enables the RB6, and notifies the UE of the enabling of the RB6 via an air interface.

For the uplink transmission, being similar to the embodiment 1, the UE determines that uplink data needs to be transmitted on an disabled RB. Here, the UE determines that uplink data needs to be transmitted on the disabled RB according to the flow routing information in the data packet as well as the mapping relationship between the flow description information and the radio bearer received from the AN, then the UE sends the data transmission request to the AN. The data transmission request includes RB information of the RB needs to be enabled, and the AN enables the relevant RBs according to the RB information.

In this embodiment, the RB deleting action and RB modifying action of the AN are similar to that in embodiment 2, and will not be repeated here.

### Embodiment 4

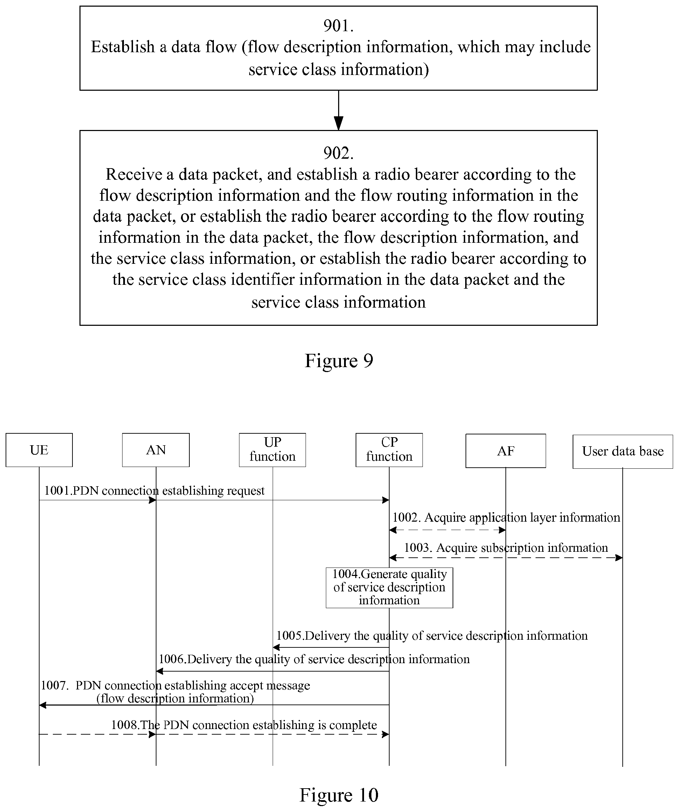

In this embodiment, the method for an AN performing RB management according to quality of service description information and packet description information in a data packet is described in detail. The packet description information includes at least one of the following information: flow routing information and service class identifier information. Also, in actual implementation, the packet description information may be included in a packet header of the data packet. The method in embodiment 4 is not only applicable to the transmission of traffic or data flows without specific bit rate requirements, but also applicable to the transmission of the traffic or the data flows with specific bit rate requirements. For example, FIG. 9 is an implementation flowchart of the bearer management in this embodiment, which includes steps described below.

In step 901, a data flow is established.

Here, the actual implementation process in the step 901 is the same as the implementation process in the embodiment 3, and will not be repeated here.

In step 902, the AN receives the data packet, and establishes RBs according to the flow description information and the flow routing information in the data packet. Alternatively, the AN establishes the RBs according to the flow description information, service class information and the flow description information in the data packet. Alternatively, the AN establishes the RBs according to the service class information and the service class identifier information in the data packet.

The method for establishing the RBs according to the service class information and the service class identifier information in the data packet in this embodiment is the same as that in embodiment 2, and will not be repeated here. This embodiment merely and exemplarily describes the above-mentioned two cases and four data flows are established as shown in embodiment three.

For a downlink transmission, the AN receives the data packet from the CN. The flow routing information in the packet header of the data packet is the flow routing information 1 and the flow routing information 3. Then the AN establishes the RB6 according to the flow description information received in the step 901. The AN may also comprehensively consider one or more factors of the service class information, overload, usage of resources, signal quality on wireless communication links, and the AN management policy, and transmit the data packet in which the flow routing information is flow routing information 1 and the flow routing information 3 on the RB6.

The uplink transmission in this embodiment is similar to that in the embodiment 2. The uplink transmission in this embodiment further includes a step 902-1 before the step 902. The AN at least establishes a default bearer RBx. When the UE has the uplink transmission, the UE transmits at least one uplink data packet on the RBx. After receiving the at least one uplink data packet, the AN establishes the RBs according to the flow routing information in the data packet and the flow description information received in the step 901. Of course, in this process, the AN may also comprehensively consider one or more factors of the service class information, overload, usage of resources, signal quality on wireless communication links, and the AN management policy. For example, the UE receives the data packet from an application layer. The flow routing information in the packet header of the data packet is the flow routing information 2. The UE transmits at least one data packet, in which the flow routing information is the flow routing information 2, on the RBx. After receiving the at least one data packet, the AN establishes the RB7 and notifies the UE of a mapping relationship between the flow description information (the data flow 2) and the RB7. After the UE receives the mapping relationship, the UE transmits the data packet in which the flow routing information is the flow routing information 2 on the RB7.

In this embodiment, the RB deleting action and the RB modifying action of the AN are similar to that in embodiment 2, and will not be repeated here.

Adopting the method in the above-mentioned embodiment in the present invention, QoS processing is no longer performed in a bearer manner in which the CN and the AN are strongly correlated. The CN does not need to consider technologies adopted by the AN. Quality of service description information is provided to the AN based on the features of data flows themselves. The AN performs the bearer management of the AN based on the received information in a data flow level, which can well meet the next generation communication system's design target that the CN and the AN are decoupled, achieve a flexible and dynamic differentiated data transmission between different traffic flows on radio links of the AN.

The process of establishing a PDN connection and the process of establishing/deleting/modifying the data flows related in the above-mentioned embodiment of the present invention are exemplarily described below based on the network structure of the next generation mobile communication system shown in FIG. 3. It is to be noted that the following is merely an example of a process in the embodiment of the present invention, and other possible changing processes are not limited in the embodiment of the present invention.

FIG. 10 is a flowchart of a process of establishing the PDN connection initiated by the UE, which includes the steps described below.

In step 1001, the UE initiates a PDN connection establishing request.

This process may merely request to establish the PDN connection, and may also request to establish the data flow simultaneous with the PDN connection establishing request.

The PDN connection establishing request includes a UE identifier. For a case where the data flows need to be established, the PDN connection establishing request may also include data flow establishing request description information. The data flow establishing request description information at least includes flow identifier information and flow routing information, and may also include bandwidth information of the request.

In step 1002, after network element/entity of the CN implementing a CP function (for ease of description, the network element/entity of the CN implementing the CP function is referred to as a CP function entity below, but other existing forms are not limited, such as one or more network elements/entities of the CN) receives the PDN connection establishing request, if the data flows are requested to establish in the PDN connection establishing request, the network element/entity implementing an Application Function (AF) acquire or verify the data flow establishing request description information of the data flows requested to be established by the PDN connection establishing request, such as verifying the bandwidth information of the request.

In step 1003, the CP function entity may also acquire subscription information of the UE from the user data base. If the subscription information has been acquired by the CP function entity, or from other function entities, this step may not be executed.

In step 1004, the CP function entity generates quality of service description information.

The quality of service description information is the above-mention corresponding information in the embodiments of the present invention.

This step is an optional step. If the service class information is predefined information, and the data flows are not established in this process, this step does not need to be executed.

In step 1005, the CP function entity sends the generated quality of service description information to network element/entity of the CN implementing a UP function (similarly, for ease of description, the network element/entity of the CN implementing the UP function is referred to a UP function entity below, but their existing forms are not limited, such as the UP function entity may be one or more network elements/entities of the CN) for use by the UP function entities.

This step is an optional step. If the service class information is predefined information, and the data flows are not established in this process, this step does not need to be executed.

In step 1006, the CP function entity sends the generated quality of service description information to the AN.

For a case where the data flows are established while establishing the PDN connection, the flow description information sent to the AN by the CP function entity includes the flow description information indicating that the data flow is successfully established by the CP function entity. If the service class information is predefined, the information sent to the AN by the CP function entity does not need to include the service class information.

After receiving the quality of service description information, the AN uses the quality of service description information according to the description of the above-mentioned embodiments when executing the above-mentioned embodiments.

In step 1007, the CP function entity sends a PDN connection establishing accept message to the UE.

If the UE requests to establish a data flow while initiating the PDN connection establishing request in step 1001, the PDN connection establishing accept message includes the flow description information of the data flow which is successfully established.

In step 1008, the UE sends a PDN connection complete message to the CP function entity.

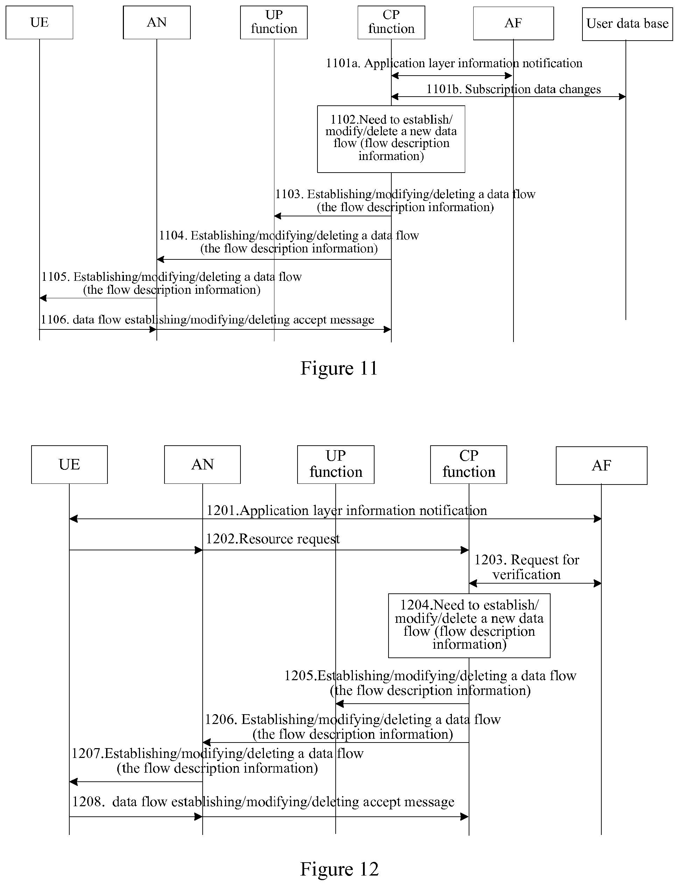

FIG. 11 a flowchart of a data flow establishing/modifying/deleting initiated by a network. The process of the data flow establishing/modifying/deleting initiated by the network may include the steps described below.

In step 1101a/1101b, through triggered by the application layer, a new data flow may be established on the current PDN connection, an established data flow may be deleted or modified (for example, changing the bandwidth of the data flow). The process of the data flow establishing/modifying/deleting may also be triggered by changes of subscription data or changes of the operator strategy of the CP function entity configuration. Therefore, steps 1101a and 1101b are both optional processes.

In step 1102, the CP function entity determines, according to the above-mentioned triggering conditions, whether it is need to execute the data flow establishing/modifying/deleting operation, the CP function entity generates the flow description information of the data flow which needs to be established or modified.

In step 1103, the CP function entity sends information of the data flow to be established/modified/deleted to the UP function entity. The information includes the flow description information.

In step 1104, the CP function entity sends the information of the data flow to be established/modified/deleted to the AN. The information includes the flow description information.

After receiving the flow description information, the AN uses the flow description information according to the description of the above-mentioned embodiments when executing the above-mentioned embodiments.

In step 1105, the AN notifies the UE of the data flow to be established/modified/deleted. The notification includes the flow description information.

In step 1106, the UE sends establishing/modifying/deleting accept message to the CP function entity via the AN.

FIG. 12 a flowchart of the data flow establishing/modifying/deleting initiated by the UE. The process of the data flow establishing/modifying/deleting initiated by the UE may include the steps described below.

In step 1201, through triggered by the application layer of the UE, a new data flow may be established on the current PDN connection, an established data flow may be deleted or modified (for example, changing the bandwidth of the data flow). This step may be triggered by the AF. The AF notifies the application layer of the UE. Then the application layer of the UE triggers the UE to send a resource request in the step 1202 for the subsequent process of this flowchart. This step may also be triggered by the UE according to the operation of the user. The UE is triggered to send the resource request in the step 1202 for the subsequent process of this flowchart.

In step 1202, the UE sends the resource request, which includes data flow establishing/modifying/deleting request description information of the data flow needs to be established/modified/deleted. The data flow establishing/modifying/deleting request description information at least includes the flow identifier information and the flow routing information, and may also include the bandwidth information of the request.

In step 1203, after receiving the resource request, the CP function entity may acquire or verify the data flow establishing/modifying/deleting request description information from the AF.

The CP function entity may also acquire or verify the data flow establishing/modifying/deleting request description information according to the acquired subscription information of the UE.

The subsequent CP function entity determines whether to execute the operations of data flow establishing/modifying/deleting. The steps 1204-1208 are exactly the same with the steps 1002-1006, and will not be repeated here.

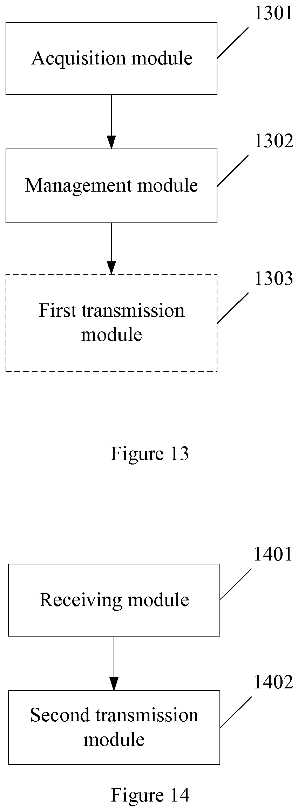

As shown in FIG. 13, a flow-based bearer management device is provided in the embodiment of the present invention. The flow-based bearer management device includes the following modules.

An acquisition module 1301 is configured to acquire quality of service description information, and the quality of service description information includes one or both of the following information: service class information and flow description information.

A management module 1302 is configured to manage a radio bearer according to the quality of service description information, or according to quality of service description information and packet description information in a received data packet. The packet description information includes at least one of the following information: service class identifier information and flow routing information.

The management module 1302 is configured to manage the radio bearer. The radio bearer management includes one or more the following management operations: establishing a radio bearer, modifying a radio bearer and deleting a radio bearer.

The acquisition module 1301 is configured to acquire the service class information in a predefined manner when acquiring the service class information, or acquire the service class information from a core network (CN); or is configured to acquire the flow description information from the CN when acquiring the flow description information.

The management module 1302 is configured to establish the radio bearer according to the service class information and obtain a mapping relationship between the service class information and the radio bearer; or receive a data packet, establish the radio bearer according to the service class information and the packet description information in the data packet, and obtain the mapping relationship between the service class information and the radio bearer, where the packet description information is the service class identifier information; or establish the radio bearer according to the flow description information and obtain a mapping relationship between the flow description information and the radio bearer; or receive the data packet, establish the radio bearer according to the flow description information and the packet description information in the data packet, and obtain the mapping relationship between the flow description information and the radio bearer, where the packet description information is the flow routing information and the data packet is transmitted from the CN or a UE.

A mapping relationship with the radio bearer identification information is represented in one or more the following manners: representing the mapping relationship between the service class information and the radio bearer by a mapping relationship between the service class identifier information and the radio bearer identification information; representing the mapping relationship between the flow description information and the radio bearer by a mapping relationship between the flow identifier information and the radio bearer identification information; and representing the mapping relationship between the flow description information and the radio bearer by a mapping relationship between the flow routing information and the radio bearer identification information. The service class identifier information is used for identifying the service class information. The radio bearer identification information is used for identifying the radio bearer. The flow identifier information is used for identifying the flow description information. The flow routing information is included in the flow description information.

The management module 1302 is further configured to notify the UE of the mapping relationship between the quality of service description information and the radio bearer.

The device further includes: a first transmission module 1303, which is configured to receive the data packet transmitted from the CN, determine the radio bearer corresponding to the data packet according to the packet description information in the data packet as well as the mapping relationship between the service class information and the radio bearer, and transmit the data packet on the determined radio bearer. The packet description information is the service class identifier information. Alternatively, the first transmission module 1303 is configured to receive the data packet transmitted from the CN, determine the radio bearer corresponding to the data packet according to the packet description information in the data packet as well as the mapping relationship between the flow description information and the radio bearer, and transmit the data packet on the determined radio bearer. The packet description information is the flow routing information.

Alternatively, the first transmission module 1303 is configured to receive the data packet transmitted from the CN, and enable the radio bearer corresponding to the packet description information in the data packet according to the packet description information in the data packet as well as the mapping relationship between the service class information and the radio bearer, where the packet description information is the service class identifier information. Alternatively, the first transmission module 1303 is configured to receive a data transmission request transmitted from the UE, enable the corresponding radio bearer according to radio bearer identification information in the data transmission request. The radio bearer identification information in the data transmission request is determined by the UE according to the mapping relationship between the service class information and the radio bearer as well as the packet description information in the data packet. The packet description information is the service class identifier information. Here, when the UE sends the data transmission request, the UE may determines the radio bearer identification information according to the packet description information in the data packet transmitted from an upper layer protocol layer. The upper layer protocol layer refers to a protocol layer (such as the application layer) above a protocol layer (such as an access layer protocol) which is in the UE and responsible for processing and sending the data transmission request.

Alternatively, the first transmission module 1303 is further configured to receive the data packet transmitted from a CN, and enable the radio bearer corresponding to the packet description information in the data packet according to the packet description information in the data packet as well as the mapping relationship between the flow description information and the radio bearer. The packet description information is the flow routing information. Alternatively, the first transmission module 1303 is further configured to receive the data transmission request transmitted from the UE, enable the corresponding radio bearer according to radio bearer identification information in the data transmission request. The radio bearer identification information in the data transmission request is determined by the UE according to the mapping relationship between the flow description information and the radio bearer as well as the packet description information in the data packet, and the packet description information is the flow routing information.

The service class information includes the service class identifier information and at least one of the following information: a priority, a data packet delay, a data packet loss rate and a maximum data rate. The flow description information includes flow identifier information, flow routing information and bandwidth information.

As shown in FIG. 14, a data transmission device is further provided by the embodiment of the present invention. The device includes a receiving module 1401 configured to receive a mapping relationship between quality of service description information and a radio bearer transmitted from an AN, where the quality of service description information includes one or both of the following information: service class information and flow description information; and a second transmission module 1402 configured to transmit, according to the mapping relationship between quality of service description information and the radio bearer, a data packet on a corresponding radio bearer.

Here, a mapping relationship with the radio bearer identification information is represented in one or more the following manners: representing the mapping relationship between the service class information and the radio bearer for uplink transmission by a mapping relationship between the service class identifier information and the radio bearer identification information; representing the mapping relationship between the flow description information and the radio bearer by a mapping relationship between the flow identifier information and the radio bearer identification information; and representing the mapping relationship between the flow description information and the radio bearer by a mapping relationship between flow routing information and the radio bearer identification information. The service class identifier information is used for identifying the service class information. The radio bearer identification information is used for identifying the radio bearer. The flow identifier information is used for identifying the flow description information. The flow routing information is included in the flow description information.

The second transmission module 1402 is configured to determine, according to packet description information in the data packet as well as the mapping relationship between the service class information and the radio bearer, the radio bearer corresponding to the data packet, and transmit the data packet on the determined radio bearer. The packet description information is the service class identifier information. Alternatively, the second transmission module 1402 is configured to determine, according to the packet description information in the data packet as well as the mapping relationship between the flow description information and the radio bearer, the radio bearer corresponding to the data packet, and transmit the data packet on the determined radio bearer. The packet description information is the flow routing information.

The second transmission module 1402 is further configured to determine, by the UE, according to packet description information in the data packet as well as the mapping relationship between the service class information and the radio bearer, the radio bearer identification information to be enabled, and transmit a data transmission request including the radio bearer identification information to the AN. The packet description information is the service class identifier information. Alternatively, the second transmission module 1402 is configured to determine, by the UE, according to packet description information in the data packet as well as the mapping relationship between the flow description information and the radio bearer, the radio bearer identification information to be enabled, and transmit the data transmission request including the radio bearer identification information to the AN. The packet description information is the flow routing information.

The second transmission module 1402 is further configured to transmit the data packet to the AN on a default bearer before receiving the mapping relationship between quality of service description information and the radio bearer transmitted from the AN.

The service class information includes the service class identifier information and at least one of the following information: a priority, a data packet delay, a data packet loss rate and a maximum data rate. The flow description information includes flow identifier information, flow routing information and bandwidth information.

The flow-based bearer management device and data transmission device provided by the embodiments of the present invention may be used for executing the technical solutions in the above-mentioned method embodiments. The implementation principles and the technical results are similar, and will not be repeated here.

The embodiment of the present invention further provides a computer-readable storage medium storing computer-executable instructions. The computer-executable instructions execute the above-mentioned flow-based bearer management method when executed by a processor.

The embodiment of the present invention further provides a computer-readable storage medium storing computer-executable instructions. The computer-executable instructions execute the above-mentioned flow-based data transmission method when executed by a processor.

It should be understood by those skilled in the art that all or some steps in the method described above may be completed by relevant hardware (such as a processor) instructed by programs, and the programs may be stored in a computer-readable storage medium, such as a read-only memory, a magnetic disk and an optical disk. Optionally, all or part of the steps in the embodiments described above may also be implemented by using one or more integrated circuits. Accordingly, the modules/units in the embodiments described above may be implemented by hardware. For example, the functions of these modules/units may be implemented by integrated circuits. Alternatively, these modules/units may be implemented by software function modules. For example, the functions of these modules/units may be implemented by using a processor to execute program instructions stored in a storage medium. Embodiments of the present invention are not limited to any specific combination of hardware and software.

### INDUSTRIAL APPLICABILITY

According to the flow-based bearer management method and device, and the data transmission method and device provided by embodiments of the present invention, quality of service description information is provided to an access network based on the features of data flows themselves. The access network performs the bearer management of the access network based on received information in a data flow level, instead of performing a QoS processing in a bearer manner of in which an core network and the access network are strongly correlated. The core network does not need to consider technologies adopted by the access network, such configuration can well meet the design target of the next generation communication system that the core network and the access network are decoupled, and achieve a flexible and dynamic differentiated data transmission between different traffic flows on radio links of the AN.

## Claims

1. A flow-based bearer management method, the method being applied to an access network, AN, and comprising:
acquiring (400a) service class information; and
managing (401) a radio bearer according to the service class information; or managing a radio bearer according to the service class information and packet description information in a received data packet, wherein the packet description information comprises service class identifier information,
notifying (402) a user equipment, UE, of a mapping relationship between the service class information and the radio bearer;
wherein the service class information comprises service class identifier information and at least one of the following information: a priority, a data packet delay, a data packet loss rate and a maximum data rate;
wherein the managing the radio bearer comprises establishing the radio bearer, and further comprises executing at least one of the following management operations: modifying the radio bearer and deleting the radio bearer;
wherein the mapping relationship between the service class information and the radio bearer is represented by a mapping relationship between the service class identifier information and radio bearer identification information, the service class identifier information is used for identifying the service class information, and the radio bearer identification information is used for identifying the radio bearer;
the method further comprising: disabling the radio bearer after being established, enabling the radio bearer in response to the AN receiving a downlink data packet from a core network, CN, or enabling the radio bearer in response to the AN receiving a data transmission request from the UE.

2. The method according to claim 1, wherein the step of acquiring the service class information comprises acquiring the service class information through a predefined manner, or acquiring the service class information from the CN.

3. The method according to claim 1, wherein the managing the radio bearer comprises:
establishing the radio bearer according to the service class information, obtaining the mapping relationship between the service class information and the radio bearer

4. The method according to claim 1, wherein the managing the radio bearer comprises:
receiving a data packet, establishing the radio bearer according to the service class information and the packet description information in the data packet, and obtaining the mapping relationship between the service class information and the radio bearer, wherein the packet description information is the service class identifier information;
wherein the data packet is transmitted from the CN or the UE.

5. The method according to claim 4, wherein when the data packet is transmitted from the UE, the data packet transmitted by the UE is received on a default bearer.

6. The method according to claim 3 or 4, wherein after the managing the radio bearer, the method further comprises:
receiving the data packet from the CN, determining the radio bearer corresponding to the data packet according to the packet description information in the data packet and the mapping relationship between the service class information and the radio bearer, and transmitting the data packet on the determined radio bearer, wherein the packet description information is the service class identifier information.

7. A data transmission method, comprising:
receiving (501), by the UE, a mapping relationship between service class information and a radio bearer from an access network, AN; said AN establishing the radio bearer, and
transmitting (502), by the UE and according to the mapping relationship between the service class information and the radio bearer, a data packet on a corresponding radio bearer,
wherein the service class information comprises service class identifier information and at least one of the following information: a priority, a data packet delay, a data packet loss rate and a maximum data rate;
wherein a mapping relationship between the service class information and the radio bearer is represented by a mapping relationship between the service class identifier information and radio bearer identification information;
wherein the service class identifier information is used for identifying the service class information, the radio bearer identification information is used for identifying the radio bearer;
wherein the radio bearer is in a disabled state after being established and the method further comprising: transmitting by the UE a data transmission request to the AN to set the radio bearer in an enabled state.

8. A flow-based bearer management device for an access network, AN and comprising:
an acquisition module (1301), configured to acquire service class information; and
a management module (1302), configured to establish a radio bearer, modify a radio bearer and delete a radio bearer according to the service class information; or establish a radio bearer, modify a radio bearer and delete a radio bearer according to the service class information and packet description information in a received data packet, wherein the packet description information comprises service class identifier information,
wherein the management module (1302) is further configured to notify a UE of a mapping relationship between the service class information and the radio bearer;
wherein the service class information comprises service class identifier information and at least one of the following information: a priority, a data packet delay, a data packet loss rate and a maximum data rate;
wherein the mapping relationship between the service class information and the radio bearer is represented by a mapping relationship between the service class identifier information and radio bearer identification information, the service class identifier information is used for identifying the service class information, and the radio bearer identification information is used for identifying the radio bearer;
wherein said device is adapted to set the radio bearer in a disabled state after being established, and is adapted to set the radio bearer in an enabled state in response to the AN receiving a downlink data packet from a core network, CN, or in response to the AN receiving a data transmission request from the UE.

9. The device according to claim 8, wherein the acquisition module (1301) is configured to acquire the service class information through a predefined manner, or acquire the service class information from the CN, when the acquisition module (1301) is configured to acquire the service class information.

10. The device according to claim 8, wherein the management module (1302) is configured to:
establish the radio bearer according to the service class information, obtain the mapping relationship between the service class information and the radio bearer.

11. The device according to claim 8, wherein the management module (1302) is configured to:
receive a data packet, establish the radio bearer according to the service class information and
the packet description information in the data packet, obtain the mapping relationship between the service class information and the radio bearer, wherein the packet description information is the service class identifier information;
wherein the data packet is transmitted from the CN or a user equipment, UE.

12. The device according to claim 8, further comprising a first transmission module (1303) configured to:
receive the data packet from the CN, determine the radio bearer corresponding to the data packet according to the packet description information in the data packet and the mapping relationship between the service class information and the radio bearer, and transmit the data packet on the determined radio bearer, wherein the packet description information is the service class identifier information.

13. A user equipment, UE, comprising:
a receiving module (1401), which is configured to receive a mapping relationship between service class information service description information and a radio bearer from an access network, AN, device, said AN device establishing the radio bearer; and
a transmission module (1402), which is configured to transmit, according to the mapping relationship between the service class information and the radio bearer, a data packet on a corresponding radio bearer,
wherein the service class information comprises the service class identifier information and at least one of the following information: a priority, a data packet delay, a data packet loss rate and a maximum data rate;
wherein the mapping relationship between the service class information and the radio bearer is represented by a mapping relationship between the service class identifier information and radio bearer identification information;
wherein the service class identifier information is used for identifying the service class information, the radio bearer identification information is used for identifying the radio bearer;
wherein the AN device sets the radio bearer in a disabled state after being established, and the UE is further configured to send a data transmission request to the AN device to set the radio bearer in an enabled state.

14. The user equipment according to claim 13, wherein the transmission module (1402) is configured to
determine, according to packet description information in the data packet and the mapping relationship between the service class information and the radio bearer, the radio bearer corresponding to the data packet, and transmit the data packet on the determined radio bearer, wherein the packet description information is the service class identifier information.

## Patentansprüche

1. Flussbasiertes Trägerverwaltungsverfahren, wobei das Verfahren auf ein Zugangsnetz, AN, angewandt wird und Folgendes umfasst:
Erfassen (400a) von Serviceklasseninformationen und
Verwalten (401) eines Funkträgers nach den Serviceklasseninformationen oder Verwalten eines Funkträgers nach den Serviceklasseninformationen und Paketbeschreibungsinformationen in einem empfangenen Datenpaket, wobei die Paketbeschreibungsinformationen Serviceklassenidentifikationsinformationen umfassen;
Benachrichtigen (402) eines Teilnehmergeräts, UE, über eine Zuordnungsbeziehung zwischen den Serviceklasseninformationen und dem Funkträger,
wobei die Serviceklasseninformationen Serviceklassenidentifikationsinformationen und wenigstens eine der folgenden Informationen umfassen: eine Priorität, eine Datenpaketverzögerung, eine Datenpaketverlustrate und eine maximale Datenrate,
wobei das Verwalten des Funkträgers das Einrichten des Funkträgers umfasst und ferner das Ausführen von wenigstens einem der folgenden Verwaltungsvorgänge umfasst: Modifizieren des Funkträgers und Löschen des Funkträgers,
wobei die Zuordnungsbeziehung zwischen den Serviceklasseninformationen und dem Funkträger durch eine Zuordnungsbeziehung zwischen den Serviceklassenidentifikationsinformationen und Funkträgeridentifikationsinformationen dargestellt ist, wobei die Serviceklassenidentifikationsinformationen zur Identifizierung der Serviceklasseninformationen verwendet werden und die Funkträgeridentifikationsinformationen zur Identifizierung des Funkträgers verwendet werden,
wobei das Verfahren ferner Folgendes umfasst: Deaktivieren des Funkträgers nach seinem Einrichten, Aktivieren des Funkträgers als Reaktion auf das Empfangen eines Downlink-Datenpakets von einem Kernnetzwerk, CN, durch das AN oder Aktivieren des Funkträgers als Reaktion auf das Empfangen einer Datenübertragungsanfrage vom UE durch das AN.

2. Verfahren nach Anspruch 1, wobei der Schritt zum Erfassen der Serviceklasseninformationen das Erfassen der Serviceklasseninformationen auf eine vordefinierte Weise oder das Erfassen der Serviceklasseninformationen vom CN umfasst.

3. Verfahren nach Anspruch 1, wobei das Verwalten des Funkträgers Folgendes umfasst: Einrichten des Funkträgers gemäß den Serviceklasseninformationen, Erhalten der Zuordnungsbeziehung zwischen den Serviceklasseninformationen und dem Funkträger.

4. Verfahren nach Anspruch 1, wobei das Verwalten des Funkträgers Folgendes umfasst:
Empfangen eines Datenpakets, Einrichten des Funkträgers nach den Serviceklasseninformationen und den Paketbeschreibungsinformationen im Datenpaket und Erhalten der Zuordnungsbeziehung zwischen den Serviceklasseninformationen und dem Funkträger, wobei die Paketbeschreibungsinformationen die Serviceklassenidentifikationsinformationen sind,
wobei das Datenpaket vom CN oder UE übertragen wird.

5. Verfahren nach Anspruch 4, wobei das vom UE übertragene Datenpaket auf einem Standardträger empfangen wird, wenn das Datenpaket vom UE übertragen wird.

6. Verfahren nach Anspruch 3 oder 4, wobei das Verfahren nach dem Verwalten des Funkträgers zudem Folgendes umfasst:
Empfangen des Datenpakets vom CN, Ermitteln des dem Datenpaket entsprechenden Funkträgers nach den Paketbeschreibungsinformationen im Datenpaket und der Zuordnungsbeziehung zwischen den Serviceklasseninformationen und dem Funkträger und Übermitteln des Datenpakets auf dem ermittelten Funkträger, wobei die Paketbeschreibungsinformationen die Serviceklassenidentifikationsinformation sind.

7. Datenübertragungsverfahren, umfassend:
Empfangen (501) einer Zuordnungsbeziehung zwischen Serviceklasseninformationen und einem Funkträger von einem Zugangsnetz, AN, durch das UE, wobei das AN den Funkträger einrichtet, und Übermitteln (502) eines Datenpakets auf einem entsprechenden Funkträger durch das UE und nach der Zuordnungsbeziehung zwischen den Serviceklasseninformationen und dem Funkträger, wobei die Serviceklasseninformationen Serviceklassenidentifikationsinformationen und wenigstens eine der folgenden Informationen umfassen: eine Priorität, eine Datenpaketverzögerung, eine Datenpaketverlustrate und eine maximale Datenrate,
wobei eine Zuordnungsbeziehung zwischen den Serviceklasseninformationen und dem Funkträger durch eine Zuordnungsbeziehung zwischen den Serviceklassenidentifikationsinformationen und den Funkträgeridentifikationsinformationen dargestellt ist,
wobei die Serviceklassenidentifikationsinformationen zur Identifizierung der Serviceklasseninformationen verwendet werden und die Funkträgeridentifikationsinformationen zur Identifizierung des Funkträgers verwendet werden,
wobei sich der Funkträger nach seinem Einrichten in einem deaktivierten Zustand befindet und das Verfahren zudem Folgendes umfasst: Übertragen einer Datenübertragungsanfrage an das AN durch das UE, um den Funkträger in einen aktivierten Zustand zu versetzen.

8. Flussbasierte Trägerverwaltungsvorrichtung für ein Zugangsnetz, AN, Folgendes umfassend:
ein Erfassungsmodul (1301), das ausgelegt ist, um Serviceklasseninformationen zu erfassen, und
ein Verwaltungsmodul (1302), das ausgelegt ist, um nach den Serviceklasseninformationen einen Funkträger einzurichten, einen Funkträger zu modifizieren und einen Funkträger zu löschen oder nach den Serviceklasseninformationen und Paketbeschreibungsinformationen in einem empfangenen Datenpaket einen Funkträger einzurichten, einen Funkträger zu modifizieren und einen Funkträger zu löschen, wobei die Paketbeschreibungsinformationen Serviceklassenidentifikationsinformationen umfassen,
wobei das Verwaltungsmodul (1302) ferner ausgelegt ist, um ein UE über eine Zuordnungsbeziehung zwischen den Serviceklasseninformationen und dem Funkträger zu benachrichtigen,
wobei die Serviceklasseninformationen Serviceklassenidentifikationsinformationen und wenigstens eine der folgenden Informationen umfassen: eine Priorität, eine Datenpaketverzögerung, eine Datenpaketverlustrate und eine maximale Datenrate,
wobei die Zuordnungsbeziehung zwischen den Serviceklasseninformationen und dem Funkträger durch eine Zuordnungsbeziehung zwischen den Serviceklassenidentifikationsinformationen und Funkträgeridentifikationsinformationen dargestellt ist, wobei die Serviceklassenidentifikationsinformationen zur Identifizierung der Serviceklasseninformationen verwendet werden und die Funkträgeridentifikationsinformationen zur Identifizierung des Funkträgers verwendet werden,
wobei die Vorrichtung geeignet ist, um den Funkträger nach dessen Einrichten in einen deaktivierten Zustand zu versetzen, und geeignet ist, um den Funkträger als Reaktion auf das Empfangen eines Downlink-Pakets von einem Kernnetzwerk, CN, durch das AN oder als Reaktion auf das Empfangen einer Datenübertragungsanfrage vom UE in einen aktivierten Zustand zu versetzen.

9. Vorrichtung nach Anspruch 8, wobei das Erfassungsmodul (1301) ausgelegt ist, um die Serviceklasseninformationen auf eine vordefinierte Weise zu erfassen oder die Serviceklasseninformationen vom CN zu erfassen, wenn das Erfassungsmodul (1301) ausgelegt ist, um die Serviceklasseninformationen zu erfassen.

10. Vorrichtung nach Anspruch 8, wobei das Verwaltungsmodul (1302) ausgelegt ist, um den Funkträger nach den Serviceklasseninformation einzurichten, die Zuordnungsbeziehung zwischen den Serviceklasseninformationen und dem Funkträger zu erhalten.

11. Vorrichtung nach Anspruch 8, wobei das Verwaltungsmodul (1302) ausgelegt ist, um ein Datenpaket zu empfangen, den Funkträger nach den Serviceklasseninformationen und den Paketbeschreibungsinformationen im Datenpaket einzurichten, die Zuordnungsbeziehung zwischen den Serviceklasseninformationen und dem Funkträger zu erhalten, wobei die Paketbeschreibungsinformationen die Serviceklassenidentifikationsinformationen sind,
wobei das Datenpaket vom CN oder einem Teilnehmergerät, UE, übertragen wird.

12. Vorrichtung nach Anspruch 8, ferner umfassend ein erstes Übertragungsmodul (1303), das ausgelegt ist, um
das Datenpaket vom CN zu empfangen, den dem Datenpaket entsprechenden Funkträger nach den Paketbeschreibungsinformationen im Datenpaket und der Zuordnungsbeziehung zwischen den Serviceklasseninformationen und dem Funkträger zu ermitteln und das Datenpaket auf dem ermittelten Funkträger zu übertragen, wobei die Paketbeschreibungsinformationen die Serviceklassenidentifikationsinformation sind.

13. Teilnehmergerät, UE, umfassend:
ein Empfangsmodul (1401), das ausgelegt ist, um eine Zuordnungsbeziehung zwischen Serviceklasseninformationsservicebeschreibungsinformati onen und einem Funkträger von einer Zugangsnetz-, AN, - Vorrichtung, zu empfangen, wobei das AN den Funkträger einrichtet, und
ein Übertragungsmodul (1402), das ausgelegt ist, um ein Datenpaket auf einem entsprechenden Funkträger nach der Zuordnungsbeziehung zwischen den Serviceklasseninformationen und dem Funkträger zu übertragen,
wobei die Serviceklasseninformationen die Serviceklassenidentifikationsinformationen und wenigstens eine der folgenden Informationen umfassen: eine Priorität, eine Datenpaketverzögerung, eine Datenpaketverlustrate und eine maximale Datenrate,
wobei die Zuordnungsbeziehung zwischen den Serviceklasseninformationen und dem Funkträger durch eine Zuordnungsbeziehung zwischen den Serviceklassenidentifikationsinformationen und den Funkträgeridentifikationsinformationen dargestellt ist,
wobei die Serviceklassenidentifikationsinformationen zur Identifizierung der Serviceklasseninformationen verwendet werden und die Funkträgeridentifikationsinformationen zur Identifizierung des Funkträgers verwendet werden,
wobei die AN-Vorrichtung den Funkträger nach dessen Einrichten in einen deaktivierten Zustand versetzt und das UE ferner ausgelegt ist, um eine Datenübermittlungsanfrage an die AN-Vorrichtung zu senden, um den Funkträger in einen aktivierten Zustand zu versetzen.

14. Teilnehmergerät nach Anspruch 13, wobei das Übertragungsmodul (1402) ausgelegt ist, um nach den Paketbeschreibungsinformationen im Datenpaket und der Zuordnungsbeziehung zwischen den Serviceklasseninformationen und dem Funkträger den Funkträger zu ermitteln, der dem Datenpaket entspricht, und das Datenpaket auf dem ermittelten Funkträger zu übertragen, wobei die Paketbeschreibungsinformationen die Serviceklassenidentifikationsinformationen sind.

## Revendications

1. Procédé de gestion de porteuses à base de flux, le procédé étant appliqué à un réseau d'accès, AN, et comprenant :
l'acquisition (400a) d'informations de classe de service ; et
la gestion (401) d'une porteuse radio en fonction des informations de classe de service ; ou la gestion d'une porteuse radio en fonction des informations de classe de service et d'informations de description de paquet dans un paquet de données reçu, dans lequel les informations de description de paquet comprennent des informations d'identifiant de classe de service,
la notification (402) à un équipement utilisateur, UE, d'une relation de cartographie entre les informations de classe de service et la porteuse radio ;
dans lequel les informations de classe de service comprennent des informations d'identifiant de classe de service et au moins l'une des informations suivantes : une priorité, un retard de paquet de données, un taux de perte de paquet de données et un débit de données maximal ;
dans lequel la gestion de la porteuse radio comprend l'établissement de la porteuse radio, et comprend en outre l'exécution d'au moins une des opérations de gestion suivantes : modification de la porteuse radio et suppression de la porteuse radio ;
dans lequel la relation de cartographie entre les informations de classe de service et la porteuse radio est représentée par une relation de cartographie entre les informations d'identifiant de classe de service et les informations d'identification de porteuse radio, les informations d'identifiant de classe de service sont utilisées pour identifier les informations de classe de service, et les informations d'identification de porteuse radio sont utilisées pour identifier la porteuse radio ;
le procédé comprenant en outre : la désactivation de la porteuse radio après son établissement, l'activation de la porteuse radio en réponse à l'AN qui reçoit un paquet de données de liaison descendante d'un réseau central, CN, ou l'activation de la porteuse radio en réponse à l'AN qui reçoit une demande de transmission de données provenant de l'UE.

2. Procédé selon la revendication 1, dans lequel l'étape d'acquisition des informations de classe de service comprend l'acquisition des informations de classe de service d'une manière prédéfinie, ou l'acquisition des informations de classe de service à partir du CN.

3. Procédé selon la revendication 1, dans lequel la gestion de la porteuse radio comprend : l'établissement de la porteuse radio en fonction des informations de classe de service, l'obtention de la relation de cartographie entre les informations de classe de service et la porteuse radio.

4. Procédé selon la revendication 1, dans lequel la gestion de la porteuse radio comprend :
la réception d'un paquet de données, l'établissement de la porteuse radio en fonction des informations de classe de service et des informations de description de paquet dans le paquet de données, et l'obtention de la relation de cartographie entre les informations de classe de service et la porteuse radio, dans lequel les informations de description de paquet sont les informations d'identifiant de classe de service ;
dans lequel le paquet de données est transmis depuis le CN ou l'UE.

5. Procédé selon la revendication 4, dans lequel lorsque le paquet de données est transmis depuis l'UE, le paquet de données transmis par l'UE est reçu sur une porteuse par défaut.

6. Procédé selon la revendication 3 ou 4, dans lequel après la gestion de la porteuse radio, le procédé comprend en outre :
la réception du paquet de données depuis le CN, la détermination de la porteuse radio correspondant au paquet de données en fonction des informations de description de paquet dans le paquet de données et de la relation de cartographie entre les informations de classe de service et la porteuse radio, et la transmission du paquet de données sur la porteuse radio déterminée, dans lequel les informations de description de paquet sont les informations d'identifiant de classe de service.

7. Procédé de transmission de données comprenant :
la réception (501), par l'UE, d'une relation de cartographie entre les informations de classe de service et une porteuse radio depuis un réseau d'accès, AN ; ledit AN établissant la porteuse radio, et émettant (502), par l'UE et en fonction de la relation de cartographie entre les informations de classe de service et la porteuse radio, un paquet de données sur une porteuse radio correspondante, dans lequel les informations de classe de service comprennent des informations d'identifiant de classe de service et au moins l'une des informations suivantes : une priorité, un retard de paquet de données, un taux de perte de paquet de données et un débit de données maximal ;
dans lequel une relation de cartographie entre les informations de classe de service et la porteuse radio est représentée par une relation de cartographie entre les informations d'identifiant de classe de service et les informations d'identification de porteuse radio ;
dans lequel les informations d'identification de classe de service sont utilisées pour identifier les informations de classe de service, les informations d'identification de porteuse radio sont utilisées pour identifier la porteuse radio ;
dans lequel la porteuse radio est dans un état désactivé après avoir été établie et le procédé comprend en outre : la transmission par l'UE d'une demande de transmission de données à l'AN pour mettre la porteuse radio dans un état activé.

8. Dispositif de gestion de porteuses à base de flux pour un réseau d'accès, AN et comprenant :
un module d'acquisition (1301), configuré pour acquérir des informations de classe de service ; et
un module de gestion (1302), configuré pour établir une porteuse radio, modifier une porteuse radio et supprimer une porteuse radio en fonction des informations de classe de service ; ou établir une porteuse radio, modifier une porteuse radio et supprimer une porteuse radio en fonction des informations de classe de service et d'informations de description de paquet dans un paquet de données reçu, dans lequel les informations de description de paquet comprennent des informations d'identifiant de classe de service,
dans lequel le module de gestion (1302) est en outre configuré pour notifier à un UE une relation de cartographie entre les informations de classe de service et la porteuse radio ;
dans lequel les informations de classe de service comprennent des informations d'identifiant de classe de service et au moins l'une des informations suivantes : une priorité, un retard de paquet de données, un taux de perte de paquet de données et un débit de données maximal ;
dans lequel la relation de cartographie entre les informations de classe de service et la porteuse radio est représentée par une relation de cartographie entre les informations d'identifiant de classe de service et les informations d'identification de porteuse radio, les informations d'identifiant de classe de service sont utilisées pour identifier les informations de classe de service, et les informations d'identification de porteuse radio sont utilisées pour identifier la porteuse radio ;
dans lequel ledit dispositif est adapté pour mettre la porteuse radio dans un état désactivé après avoir été établie, et est adapté pour mettre la porteuse radio dans un état activé en réponse à l'AN recevant un paquet de données de liaison descendante d'un réseau central, CN, ou en réponse à l'AN recevant une demande de transmission de données provenant de l'UE.

9. Dispositif selon la revendication 8, dans lequel le module d'acquisition (1301) est configuré pour acquérir les informations de classe de service d'une manière prédéfinie, ou acquérir les informations de classe de service à partir du CN, lorsque le module d'acquisition (1301) est configuré pour acquérir les informations de classe de service.

10. Dispositif selon la revendication 8, dans lequel le module de gestion (1302) est configuré pour : établir la porteuse radio en fonction des informations de classe de service, obtenir la relation de cartographie entre les informations de classe de service et la porteuse radio.

11. Dispositif selon la revendication 8, dans lequel le module de gestion (1302) est configuré pour : recevoir un paquet de données, établir la porteuse radio selon les informations de classe de service et les informations de description de paquet dans le paquet de données, obtenir la relation de cartographie entre les informations de classe de service et la porteuse radio, dans lequel les informations de description de paquet sont les informations d'identifiant de classe de service ;
dans lequel le paquet de données est transmis à partir du CN ou d'un équipement utilisateur, UE.

12. Dispositif selon la revendication 8, comprenant en outre un premier module de transmission (1303) configuré pour :
recevoir le paquet de données en provenance du CN, déterminer la porteuse radio correspondant au paquet de données en fonction des informations de description du paquet dans le paquet de données et de la relation de cartographie entre les informations de classe de service et la porteuse radio, et transmettre le paquet de données sur la porteuse radio déterminée, dans lequel les informations de description de paquet sont les informations d'identifiant de classe de service.

13. Équipement utilisateur, UE, comprenant :
un module de réception (1401), qui est configuré pour recevoir une relation de cartographie entre les informations de description de service d'informations de classe de service et une porteuse radio d'un dispositif de réseau d'accès, AN, ledit dispositif AN établissant la porteuse radio ; et
un module de transmission (1402), qui est configuré pour transmettre, en fonction de la relation de cartographie entre les informations de classe de service et la porteuse radio, un paquet de données sur une porteuse radio correspondante,
dans lequel les informations de classe de service comprennent les informations d'identifiant de classe de service et au moins l'une des informations suivantes : une priorité, un retard de paquet de données, un taux de perte de paquet de données et un débit de données maximal ;
dans lequel la relation de cartographie entre les informations de classe de service et la porteuse radio est représentée par une relation de cartographie entre les informations d'identifiant de classe de service et les informations d'identification de porteuse radio ;
dans lequel les informations d'identification de classe de service sont utilisées pour identifier les informations de classe de service, les informations d'identification de porteuse radio sont utilisées pour identifier la porteuse radio ;
dans lequel le dispositif AN met la porteuse radio dans un état désactivé après son établissement, et l'UE est en outre configuré pour envoyer une demande de transmission de données au dispositif AN pour mettre la porteuse radio dans un état activé.

14. Équipement utilisateur selon la revendication 13, dans lequel le module de transmission (1402) est configuré pour déterminer, selon les informations de description de paquet dans le paquet de données et la relation de cartographie entre les informations de classe de service et la porteuse radio, la porteuse radio correspondant au paquet de données, et transmettre le paquet de données sur la porteuse radio déterminée, dans lequel les informations de description de paquet sont les informations d'identifiant de classe de service.
